# EUROPÄISCHE PATENTSCHRIFT

(11) **EP 0 964 126 B1**
(45) Veröffentlichungstag und Bekanntmachung des Hinweises auf die Patenterteilung: **21.07.2004**
(21) Anmeldenummer: 99105978.3
(22) Anmeldetag: 25.03.1999
(51) Int. Cl.: E05F 15/16, H02K 7/116

(54) **Antriebseinheit mit Positionserfassung**
Drive unit with position determination
Unité d'entraînement avec détection de position

(30) Priorität: 10.06.1998 DE 19825888
(43) Veröffentlichungstag der Anmeldung: 15.12.1999
(73) Patentinhaber: Siemens Aktiengesellschaft, 80333 München (DE)
(72) Erfinder: Anschicks, Rolf, 35510 Butzbach (DE)

(56) Entgegenhaltungen:
- EP-A- 0 631 367
- WO-A-97/48158
- DE-A- 19 534 018
- FR-A- 2 702 258
- US-A- 5 693 993

## Beschreibung

Die Erfindung befaßt sich mit einer Antriebseinheit mit einem Elektromotor, auf dessen Motorwelle eine Schnecke angeordnet ist, die ein Schneckenrad auf einer Abtriebswelle antreibt, deren Stellung sensorisch erfaßbar ist.

Eine derartige Vorrichtung ist aus der US-A-5,693,993 bekannt.

Derartige Antriebseinheiten lassen sich beispielsweise im Fahrzeugbereich als Fensterheber, zur Sitzverstellung, zur Verstellung von Klappen in Klimaanlagen, Drosselklappen oder sonstigen Anwendungen einsetzen. Bei diesen Anwendungen ist es gewünscht, die momentane Position des Schneckenrades zu kennen und bestimmte Ausgangspositionen bei der Inbetriebnahme der Antriebseinheit ansteuern zu können. Die bisher übliche Positionserfassung der Abtriebswelle mittels Potentiometern ist jedoch verschleißbehaftet, die über die Lebensdauer der Antriebseinheit zu Ungenauigkeiten bei der Stellungserfassung oder sogar zum Ausfall führen können.

Die Aufgabe der Erfindung besteht darin, eine Antriebseinheit zu schaffen, die verschleißfrei arbeitet.

Erfindungsgemäß wird die Aufgabe dadurch gelöst, daß bei einer Antriebseinheit der eingangs beschriebenen Art wenigstens zwei berührungslos arbeitende Positionssensoren vorgesehen sind, von denen einer mit wenigstens einem mit Motorwellendrehzahl rotierenden Geberelement und der andere mit wenigstens einem mit Abtriebswellendrehzahl rotierenden Geberelement zusammenwirkt.

Änderungen der Position des Schneckenrades werden bei der erfindungsgemäßen Antriebseinheit nicht mehr über die Veränderung eines Potentiometerwiderstandes, sondern durch Zählen der Impulse der Positionssensoren ermittelt. Da Schneckengetriebe mit sehr großen Übersetzungsverhältnissen arbeiten, rotiert die Motorwelle mit einer vielfachen Drehzahl der Abtriebswelle. Sind beiden Positionssensoren gleiche Anzahlen von Geberelementen zugeordnet, erzeugt der Positionssensor an der Motorwelle ein dem Übersetzungsverhältnis entsprechendes Vielfaches von Signalen im Verhältnis zu dem Positionssensor an der Abtriebswelle. Dies bedeutet, das zwei aufeinanderfolgend erfaßte Impulse an der Motorwelle einer relativ kleinen Drehwinkeländerung der Abtriebswelle entsprechen.

Vorzugsweise ermittelt eine Auswerteinrichtung aus den Signalen der beiden Positionssensoren die Absolutstellung der Motor- und der Abtriebswelle. Dies kann beispielsweise dann erfolgen, wenn beim Anfahren der Antriebseinheit nach einem Spannungsausfall die Antriebseinheit automatisch zurückgesetzt wird, bis der Positionssensor der Abtriebswelle das vorbeilaufende Geberelement erfaßt und dieses Signal mit dem Positionssignal des Positionssensors an der Motorwelle verglichen wird.

Vorzugsweise ist wenigstens ein Geberelement ein Magnet und der zugehörige Positionssensor ein Hallsensor. Grundsätzlich ist auch der Einsatz anderer berührungsloser Sensoren, wie zum Beispiel Induktivgeber oder optisch arbeitende Sensoren, denkbar.

Das mit Abtriebswellendrehzahl rotierende Geberelement kann seitlich an dem Schneckenrad sitzen, wo es wenig Bauraum benötigt und beispielsweise mit Hilfe eines an einem Vorsprung sitzenden Positionssensors erfaßbar ist. Bei einer bevorzugt parallelen Lage des Vorsprungs zur Schneckenradebene lassen sich das Geberelement am Schneckenrad und der zugehörige Positionssensor platzsparend in an sich bekannten Antriebseinheiten unterbringen.

Das mit Motorwellendrehzahl rotierende Geberelement ist zweckmäßigerweise auf dem Außenumfang der Motorwelle angeordnet.

Eine besonders einfache Anordnung mit Montagevorteilen insbesondere bei der Verkabelung der Positionssensoren ergibt sich, wenn beide Positionssenoren an einem einzigen Bauelement angebracht sind, das ein entsprechend angepaßtes Bauelement einer an sich bekannten Antriebseinheit sein kann, zum Beispiel der Halter für die Bürsten des Motors.

Nachfolgend wird anhand der beigefügten Zeichnungen näher auf ein Ausführungsbeispiel der Erfindung eingegangen. Es zeigen:
- Figur 1: einen Schnitt einer Antriebseinheit mit Schneckengetriebe;
- Figur 2: einen Querschnitt der Antriebseinheit nach Figur 1 längs der Linie A-A.

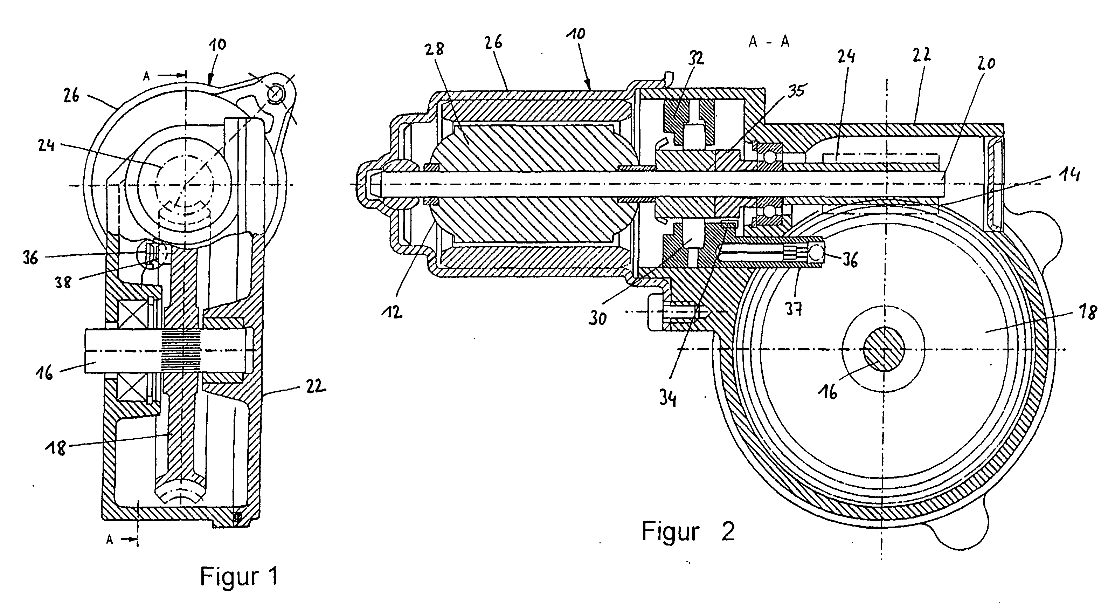

In den Figuren 1 und 2 ist eine Antriebseinheit 10 dargestellt, die im wesentlichen aus einem elektrischen Antrieb 12 und einer Schneckengetriebestufe 14 mit einer Abtriebswelle 16 besteht. Die Abtriebswelle 16, auf der ein Schneckenrad 18 sitzt, und die Antriebswelle 20 des elektrischen Motors 12 sind in einem Getriebegehäuse 22 gelagert. Auf der Antriebswelle 20 sitzt eine Schnecke 24, die mit dem Schneckenrad 18 in Eingriff steht.

Der Elektromotor 12 ist in einem Motorgehäuse 26 angeordnet, das an das Getriebegehäuse 22 angeflanscht ist. Die Stromversorgung des Rotors 28 des Elektromotors 12 erfolgt in üblicher Weise über Bürsten 30, die in einem Halter 32 im Flanschbereich des Getriebegehäuses 22 angeordnet sind. In dem Halter 32 sitzt ein erster Hallsensor 34, der mit einem mit der Antriebswelle 20 rotierenden Magneten 35 zusammenwirkt, und ein zweiter Hallsensor 36, der mit einem an der Flanke des Schneckenrades 18 angeordneten Magneten 38 zusammenwirkt. Der zweite Hallsensor 36 sitzt an einem Vorsprung 37, der parallel zwischen der Gehäusewand des Getriebegehäuses 22 und dem Schneckenrad 18 in die Nähe der Umlaufbahn des Magneten 18 ragt. Über den Umfang der Antriebswelle 20 und den Umkreis an der Flanke des Schneckenrades 18 können mehrere Magnete angeordnet sein, so daß die Hallsensoren 34, 36 pro Umdrehung der Antriebswelle 20 beziehungsweise Abtriebswelle 16 mehrere Impulse erzeugen. Statt der Hallsensoren können auch andere berührungslos arbeitende Sensoren vorgesehen sein, beispielsweise induktiv oder optisch arbeitende Sensoren.

Da sowohl die Bürsten 30 als auch die Hallsensoren 34, 36 an dem Halter 32 montiert sind, kann der Anschluß des Antriebselements 10 beispielsweise an die Bordelektronik eines Kraftfahrzeugs über eine einzige Steckverbindung am Halter 32 erfolgen.

Die berührungslos arbeitenden Hallsensoren 34, 36 funktionieren über die gesamte Lebensdauer des Antriebselements 10 verschleißfrei, wobei die Ausgangssignale der beiden Hallsensoren 34, 36 von einer Elektronik (nicht gezeigt) ausgewertet werden. Durch eine geeignete Verknüpfung der Ausgangssignale der Hallsensoren 34, 36 ist eine momentane Positionsbestimmung und auch die Bestimmung einer Ausgangsposition möglich, die beispielsweise nach einem Spannungsausfall zur Neuinitialisierung des Systems angefahren wird.

Die Antriebseinheit 10 läßt sich beispielsweise im Fahrzeugbereich bei Fensterhebern, zur Sitzverstellung, zur Verstellung von Klappen bei Klimaanlagen oder Drosselklappen sowie sonstigen Anwendungen einsetzen. Das Einsatzgebiet der Antriebseinheit ist jedoch nicht auf Fahrzeuge beschränkt.

### Bezugszeichenliste:

- 10: Antriebseinheit
- 12: elektrischer Antrieb (Elektromotor)
- 14: Schneckengetriebestufe
- 16: Abtriebswelle
- 18: Schneckenrad
- 20: Antriebswelle
- 22: Getriebgehäuse
- 24: Schnecke
- 26: Motorgehäuse
- 28: Rotor
- 30: Bürsten
- 32: Halter
- 34: Hallsensor (Positionssensor)
- 35: Rotierender Magnet
- 36: Hallsensor (Positionssensor)
- 37: Vorsprung
- 38: Magnet (Geberelement)

## Patentansprüche

1. Antriebseinheit mit einem Elektromotor (12), auf dessen Motorwelle (20) eine Schnecke (24) angeordnet ist, die ein Schneckenrad (18) auf einer Abtriebswelle (16) antreibt, dessen Stellung sensorisch erfaßbar ist, **dadurch gekennzeichnet, daß** wenigstens zwei berührungslos arbeitende Positionssensoren (34, 36) vorgesehen sind, von denen einer mit wenigstens einem mit Motorwellendrehzahl rotierenden Geberelement und der andere mit wenigstens einem mit Abtriebswellendrehzahl rotierenden Geberelement (38) zusammenwirkt.

2. Antriebseinheit nach Anspruch 1, **dadurch gekennzeichnet, daß** eine Auswerteinrichtung aus den Signalen der beiden Positionssensoren (34, 36) die Absolutstellung der Motor- (20) und der Abtriebswelle (16) ermittelt.

3. Antriebseinheit nach Anspruch 1 oder 2, **dadurch gekennzeichnet, daß** wenigstens ein Geberelement (38) ein Magnet und der zugehörige Positionssensor (34, 36) ein Hallsensor ist.

4. Antriebseinheit nach einem der Ansprüche 1 bis 3, **dadurch gekennzeichnet, daß** das mit Abtriebswellendrehzahl rotierende Geberelement (38) seitlich an dem Schneckenrad (18) sitzt.

5. Antriebseinheit nach Anspruch 4, **dadurch gekennzeichnet, daß** der Positionssensor (36) des an dem Schneckenrad (18) angeordneten Geberelements (38) an einem Vorsprung (37) sitzt.

6. Antriebseinheit nach Anspruch 5, **dadurch gekennzeichnet, daß** der Vorsprung (37) parallel zur Schneckenradebene liegt.

7. Antriebseinheit nach einem der vorhergehenden Ansprüche, **dadurch gekennzeichnet, daß** das mit Motorwellendrehzahl rotierende Geberelement auf dem Außenumfang der Motorwelle (20) angeordnet ist.

8. Antriebseinheit nach einem der vorhergehenden Ansprüche, **dadurch gekennzeichnet, daß** beide Positionssensoren (34, 36) an einem Halteelement (32) angebracht sind.

## Claims

1. Drive unit having an electric motor (12) on whose motor shaft (20) a worm (24) which drives a worm gear (18) on an output shaft (16) is arranged, it being possible to sense the position of said worm gear (18), **characterized in that** at least two position sensors (34, 36) which operate in a contactless fashion are provided, one of which sensors interacts with at least one sensor element which rotates at the rotational speed of the motor shaft, and the other of which interacts with at least one sensor element (38) which rotates at the rotational speed of the output shaft.

2. Drive unit according to Claim 1, **characterized in that** an evaluation device determines the absolute position of the motor shaft (20) and of the output shaft (16) from the signals of the two position sensors (34, 36).

3. Drive unit according to Claim 1 or 2, **characterized in that** at least one sensor element (38) is a magnet, and the associated position sensor (34, 36) is a Hall sensor.

4. Drive unit according to one of Claims 1 to 3, **characterized in that** the sensor element (38) which rotates at the rotational speed of the output shaft is seated laterally on the worm gear (18).

5. Drive unit according to Claim 4, **characterized in that** the position sensor (36) of the sensor element (38) which is arranged on the worm gear (18) is seated on a projection (37).

6. Drive unit according to Claim 5, **characterized in that** the projection (37) lies parallel to the plane of the worm gear.

7. Drive unit according to one of the preceding claims, **characterized in that** the sensor element which rotates at the rotational speed of the motor shaft is arranged on the outer circumference of the motor shaft (20).

8. Drive unit according to one of the preceding claims, **characterized in that** both position sensors (34, 36) are mounted on a securing element (32).

## Revendications

1. Unité d'entraînement avec un moteur électrique (12) sur l'arbre moteur (20) duquel est disposée une vis sans fin (24) qui entraîne une roue (18) disposée sur un arbre entraîné (16) et dont la position peut être détectée sensoriellement, **caractérisée en ce que** sont prévus au moins deux capteurs de position (34, 36) qui fonctionnent sans contact, dont l'un coopère avec au moins un élément transmetteur dont la vitesse de rotation est la même que celle de l'arbre moteur et dont l'autre coopère avec au moins un élément transmetteur (38) dont la vitesse de rotation est la même que celle de l'arbre entraîné.

2. Unité d'entraînement selon la revendication 1, **caractérisée en ce que** les positions absolues de l'arbre moteur (20) et de l'arbre entraîné (16) sont déterminées par un dispositif d'évaluation à partir des signaux des deux capteurs de position (34, 36).

3. Unité d'entraînement selon les revendications 1 ou 2, **caractérisée en ce qu'**au moins un élément transmetteur (38) est un aimant et **en ce que** le capteur (34, 36) qui lui est associé est un capteur à effet Hall.

4. Unité d'entraînement selon une des revendications 1 à 3, **caractérisée en ce que** l'élément transmetteur (38) qui tourne à la même vitesse que l'arbre entraîné est disposé latéralement sur la roue (18).

5. Unité d'entraînement selon la revendication 4, **caractérisée en ce que** le capteur de position (36) de l'élément transmetteur (38) disposé près de la roue (18) repose sur une saillie (37).

6. Unité d'entraînement selon la revendication 5, **caractérisée en ce que** la saillie (37) s'étend parallèlement au plan de la roue.

7. Unité d'entraînement selon une des revendications qui précèdent, **caractérisée en ce que** l'élément transmetteur qui tourne à la même vitesse que l'arbre moteur est disposé sur le pourtour extérieur de l'arbre moteur (20).

8. Unité d'entraînement selon une des revendications qui précèdent, **caractérisée en ce que** les deux capteurs de position (34, 36) sont placés sur un élément de support (32).
